# EUROPÄISCHE PATENTANMELDUNG

(11) **EP 3 770 635 A1**
(43) Veröffentlichungstag der Anmeldung: **27.01.2021**
(21) Anmeldenummer: 19188227.3
(22) Anmeldetag: 25.07.2019
(51) Int. Cl.: G01S 17/02, G01S 17/04, G01S 17/42, G06F 1/20, G06F 1/324, G06F 1/3287, G06F 1/3203, F16P 3/14

(54) **SICHERHEITSSENSOR MIT VARIABLER TAKTRATE UND/ODER ZEITWEISE AKTIVIERUNG VON KOMPONENTEN**

(71) Anmelder: Leuze electronic GmbH + Co. KG, 73277 Owen/Teck (DE)
(72) Erfinder: Tkach, Gennady, 81371 München (DE); Hubert, Jörg, 85244 Röhrmoos (DE); Heckmayr, Alexander, 86807 Buchloe (DE); Wursthorn, Viktor, 72636 Frickenhausen (DE); Feller, Bernhard, 86316 Friedberg (DE)
(74) Vertreter: Ruckh, Rainer Gerhard

(57) **Zusammenfassung**

Die Erfindung betrifft einen Sensor (1) mit Sensorkomponenten, welche zur Erfassung von Objekten (7) ausgebildet sind, mit einer Auswerteeinheit (6), welche zur Auswertung von Sensorsignalen der Sensorkomponenten ausgebildet ist und mit Schnittstellenkomponenten, welche zur Ein- und/oder Ausgabe von Signalen ausgebildet sind. Es ist wenigstens eine Rechnereinheit vorgesehen, welche mit einer variablen Taktrate betreibbar ist. Zusätzlich oder alternativ sind Komponenten des Sensors (1) nur zeitweise aktiviert.

## Beschreibung

Die Erfindung betrifft einen Sensor. Derartige Sensoren umfassen generell Sensorkomponenten zur Erfassung von Objekten, eine Auswerteeinheit zur Auswertung von Sensorsignalen der Sensorkomponenten und Schnittstellenkomponenten, mittels derer Signale vom Sensor an eine externe Einheit ausgegeben werden und von der externen Einheit in den Sensor eingelesen werden können.

Eine generelle Anforderung an derartige Sensoren besteht darin, dass diese eine möglichst kleine Bauform aufweisen. Dies führt dazu, dass in Gehäusen von Sensoren elektronische Komponenten in großer Anzahl in hoher Packungsdichte untergebracht werden müssen. Dadurch ergibt sich als generelles Problem, dass während des Betriebs des Sensors in dessen Innenraum eine große Wärmeentwicklung vorhanden ist. Dabei ist weiter problematisch, dass aufgrund der zum Schutz gegen Umwelteinflüsse dichten Kapselung der Sensoren in Gehäusen die im Innenraum des Gehäuses entstehende Wärme nicht ausreichend abgeführt werden kann. Daher kann es zu Überhitzungen des Sensors und dadurch bedingt zu Fehlfunktionen kommen.

Prinzipiell kann dieses Problem dadurch gelöst werden, dass im Sensor Kühlvorrichtungen eingebaut werden. Dies jedoch führt zu einer unerwünschten Vergrößerung der Bauform des Sensors. Des Weiteren bedingen Kühlvorrichtungen einen erhöhten konstruktiven Aufwand, was letztlich zu einer Erhöhung der Herstellkosten des Sensors führt.

Der Erfindung liegt die Aufgabe zugrunde einen Sensor der eingangs genannten Art bereitzustellen, welcher bei geringem konstruktivem Aufwand eine hohe Funktionalität und eine hohe Betriebssicherheit aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Sensor mit Sensorkomponenten, welche zur Erfassung von Objekten ausgebildet sind, mit einer Auswerteeinheit, welche zur Auswertung von Sensorsignalen der Sensorkomponenten ausgebildet ist und mit Schnittstellenkomponenten, welche zur Ein- und/oder Ausgabe von Signalen ausgebildet sind. Es ist wenigstens eine Rechnereinheit vorgesehen, welche mit einer variablen Taktrate betreibbar ist. Alternativ oder zusätzlich sind Komponenten des Sensors nur zeitweise aktiviert.

Die Erfindung betrifft weiterhin ein Verfahren zum Betrieb eines Sensors

Der Grundgedanke der Erfindung besteht darin, den Betrieb des Sensors zeitlich variabel auszugestalten, so dass dieser bei Bedarf in einem Energiesparmodus betrieben werden kann.

Insbesondere ist die Verlustleistung des Sensors dadurch reduziert, dass die wenigstens eine Rechnereinheit bei reduzierter Taktrate betrieben ist und/oder dass Komponenten des Sensors deaktiviert sind.

Damit kann ohne konstruktiven Zusatzaufwand, wie das Vorsehen von Kühlvorrichtungen, auf einfache Weise ein Überhitzen des Sensors verhindert werden. Dadurch wird die Betriebssicherheit des Sensors erhöht, da Fehlfunktionen des Sensors aufgrund von Überhitzungen vermieden werden.

Mit dem erfindungsgemäßen Sensor wird selbsttätig ein Energiemanagement durchgeführt. Vorzugsweise situationsbedingt, insbesondere abhängig von der aktuellen Betriebsart kann im Sensor selbsttätig die Taktrate der Rechnereinheit geändert werden.

Dabei liegt der Erfindung die Erkenntnis zugrunde, dass die oder jede im Sensor integrierte Rechnereinheit ein wesentlicher Wärmelieferant ist, wobei die Verlustleistung und damit die Wärmeentwicklung um so größer ist je höher die Taktrate der Rechnereinheit ist.

Das erfindungsgemäße Energiemanagement des Sensors sieht vor, dass dann, wenn es die Randbedingungen erlauben oder bei einer bereits vorhandenen erhöhten Wärmeentwicklung es für die fehlerfreie Funktion des Sensors erforderlich ist, die oder jede Rechnereinheit mit einer reduzierten Taktrate betrieben wird.

Im einfachsten Fall wird die oder jede Rechnereinheit in einem Normalbetrieb mit einer Maximal-Taktrate betrieben und in einem Energiesparmodus mit einer Minimal-Taktrate betrieben, wobei die Minimal-Taktrate signifikant kleiner als die Maximal-Taktrate ist.

Typischerweise bildet die Rechnereinheit die Auswerteeinheit des Sensors.

Besonders vorteilhaft ist der Sensor als Sicherheitssensor ausgebildet. Zur Erfüllung der sicherheitstechnischen Anforderungen weist die Auswerteeinheit zwei sich zyklisch überwachende Rechnereinheiten auf.

Generell erfolgt die Reduzierung der Taktrate der Rechnereinheit in dem Maße und zu solchen Zeiten, dass für die Rechnereinheit noch hinreichend ihre Funktion als Auswerteeinheit erfüllen kann.

Das im Sensor durchgeführte Energiemanagement sieht weiter vor, zur Vermeidung übermäßiger Wärmeentwicklungen Komponenten des Sensors zeitweise zu deaktivieren. Vorteilhaft handelt es sich hierbei um Schnittstellenkomponenten des Sensors.

Hierbei liegt der Erfindung die Erkenntnis zugrunde, dass zumindest ein Teil der vorhandenen Schnittstellenkomponenten des Sensors nicht dauernd benötigt wird, so dass diese zeitweise deaktiviert werden können.

Insbesondere werden Schnittstellenkomponenten mit hohem Stromverbrauch, wie z. B. Treiberstufen, deaktiviert.

Gemäß einer vorteilhaften Ausführungsform der Erfindung ist die wenigstens eine Rechnereinheit während einer Anlaufphase mit einer hohen Taktrate betrieben. Während eines darauf folgenden Arbeitsbetriebs ist die Rechnereinheit mit reduzierter Taktrate betrieben.

Dabei werden in der wenigstens einen Rechnereinheit während der Anlaufphase Routinen für den nachfolgenden Arbeitsbetrieb abgearbeitet.

Generell ist die oder jede Rechnereinheit während der Anlaufphase stärker belastet als während des Arbeitsbetriebs. Daran angepasst erfolgt die Anpassung der Taktrate derart, dass während der Anlaufphase die oder jede Rechnereinheit mit einer höheren Taktrate als während des Arbeitsbetriebs betrieben wird, um so den erhöhten Rechenaufwand zu bewältigen. Da im nachfolgenden Arbeitsbetrieb die oder jede Rechnereinheit mit einer reduzierten Taktrate betrieben wird, wird eine Überhitzung des Sensors vermieden.

Gemäß einer weiteren vorteilhaften Ausführungsform der Erfindung sind Mittel zur Messung der inneren Sensortemperatur vorgesehen. Abhängig von den Messergebnissen ist die Taktrate der wenigstens einen Rechnereinheit und/oder die Aktivierung oder Deaktivierung der Komponenten vorgegeben.

Damit wird eine ereignisgesteuerte, von der aktuellen Sensortemperatur abhängige Vorgabe der Taktrate realisiert, wodurch besonders effizient Überhitzungen des Sensors vermieden werden.

Besonders vorteilhaft ist das Maß der Reduzierung der Taktraten der wenigstens einen Rechnereinheit durch die gemessene innere Sensortemperatur bestimmt.

Damit erfolgt abhängig von der Sensortemperatur eine abgestaffelte Veränderung der Taktrate und damit eine besonders gut an sich verändernde Randbedingungen angepasste Reaktion des Sensors.

Gemäß einer besonders vorteilhaften Ausführungsform ist bei einem Betrieb der wenigstens einen Rechnereinheit bei reduzierter Taktrate der Funktionsumfang des Sensors reduziert.

Da mit der Reduzierung der Taktrate die Leistungsfähigkeit der oder jeder Rechnereinheit reduziert wird, wird bei einer solchen Reduzierung der Taktrate insbesondere dann, wenn dann eine Abarbeitung aller Sensorfunktionen zeitkritisch werden würde, auch der Funktionsumfang des Sensors reduziert. Die Reduzierung erfolgt generell derart, dass nur verzichtbare, insbesondere für die Überwachungsfunktion des Sensors nicht unbedingt erforderliche Funktionen deaktiviert werden. Generell kann der Funktionsumfang auch reduziert werden, wenn die Taktrate noch nicht reduziert ist und lediglich eine erhöhte Sensortemperatur registriert wird.

Beispielsweise kann bei reduzierter Taktrate die Genauigkeit von Auswertealgorithmen reduziert sein.

Dadurch kann bei der Auswertung von Sensorsignalen eine erhebliche Rechenzeitersparnis erzielt werden, so dass diese Auswertungsalgorithmen auch von Rechnereinheiten mit reduzierten Taktraten ohne weiteres abgearbeitet werden können.

Weiterhin können bei reduzierten Taktraten die Reaktionszeiten des Sensors erhöht sein.

Insbesondere generiert der Sensor das Objektfeststellungssignal mit bestimmten Reaktionszeiten. Durch eine Erhöhung der Reaktionszeit muss in der oder jeder Rechnereinheit nicht kurzfristig eine hohe Rechenleistung zur Verfügung gestellt werden.

Weiterhin ist es möglich, dass bei reduzierter Taktrate Funktionalitäten des Sensors deaktiviert oder reduziert sind.

So kann beispielsweise die Signalausgabe am Sensor nun auch in größeren Zeitintervallen erfolgen. Weiterhin ist es möglich, bestimmte Signalausgaben für einen vorgegebenen Zeitraum komplett einzustellen.

Schließlich sind Algorithmen zur Parametereinstellung und/oder zur Verbesserung der Störfestigkeit von Sensorsignalen deaktiviert oder reduziert.

Insbesondere sind in der wenigstens einen Rechnereinheit sicherheitsrelevante und nicht sicherheitsrelevante Funktionalitäten implementiert. Bei reduzierter Taktrate sind nur die nicht sicherheitsrelevanten Funktionalitäten deaktiviert oder reduziert.

Diese Aufteilung ist insbesondere bei als Sicherheitssensoren ausgebildeten Sensoren von Bedeutung. Ein derartiger Sicherheitssensor muss, um die normativen Anforderungen für den Einsatz im Bereich der Sicherheitstechnik zu erfüllen, einen fehlersicheren Aufbau aufweisen und zudem gewährleisten, dass die vom Sensor ausgegebenen Signale, insbesondere Objektfeststellungssignale, fehlersicher sind.

Je nach sicherheitstechnischer Anforderungskriterien muss für den Sicherheitssensor ein bestimmtes Sicherheitslevel erfüllt sein.

Da bei einer Reduzierung der Taktraten die Rechenkapazität der oder jeder Rechnereinheit entsprechend reduziert ist, werden in diesem Fall nur noch die sicherheitsrelevanten Funktionalitäten des Sensors in vollem Umfang aufrechterhalten, während die nicht sicherheitsrelevanten Funktionalitäten nur noch eingeschränkt oder überhaupt nicht mehr zur Verfügung gestellt werden.

Die Abarbeitung von sicherheitsrelevanten und nicht sicherheitsrelevanten Funktionalitäten kann von dem zu erfüllenden Sicherheitslevel abhängen.

Beispiele für nicht sicherheitsrelevante Funktionalitäten können z. B. Anzeigen wie Status-Anzeigen sein. Sicherheitsrelevante Funktionalitäten sind insbesondere diejenigen, die zur Generierung fehlersicherer Objektfeststellungssignale benötigen werden. Ein Sicherheitssensor weist bevorzugt zwei sich gegenseitig zyklisch überwachende Rechnereinheiten auf. Je nach Aufteilung von sicherheitsrelevanten und nicht sicherheitsrelevanten Funktionalitäten kann der Umfang dieser Überwachung variieren.

Vorteilhaft wird eine Reduzierung des Funktionsumfangs an eine externe Einheit in Form eines Meldesignals ausgegeben.

Das Meldesignal kann im einfachsten Fall als binäres Signal ausgegeben werden. Alternativ kann das Meldesignal Informationen enthalten, in welchem Umfang eine Reduzierung des Funktionsumfangs vorliegt.

Damit kann einem Benutzer der aktuelle Funktionsumfang angezeigt werden.

Besonders vorteilhaft ist abhängig von dem Meldesignal in der internen Einheit eine Sensorapplikation veränderbar.

Dies ist insbesondere dann zweckmäßig, wenn die externe Einheit eine Steuerung ist, die den Betrieb einer Anlage, wie z. B. einer Maschine oder eines Fahrzeugs, in Abhängigkeit der Signale des Sensors steuert. In diesem Fall kann die Steuerung die Anlage abhängig vom Funktionsumfang steuern.

Ist beispielsweise bei dem Sensor der Funktionsumfang derart reduziert, dass der Sensor verlängerte Reaktionszeiten aufweist, werden an der Steuerung nur noch langsamere Bearbeitungsvorgänge zugelassen.

Der erfindungsgemäße Sensor kann prinzipiell als Radarsensor, Ultraschallsensor oder dergleichen ausgebildet sein. Besonders vorteilhaft ist der Sensor ein optischer Sensor.

Insbesondere ist der optische Sensor eine Lichtschranke, ein Lichtvorhang, ein Distanzsensor, ein Codeleser oder ein Flächendistanzsensor.

Die Erfindung wird im Folgenden anhand der Zeichnungen erläutert. Es zeigen:
- Figur 1:: Ausführungsbeispiel des erfindungsgemäßen Sensors in einer Anordnung mit einer Steuerung.
- Figur 2:: Funktionsdiagramm des Sensors gemäß Figur 1.

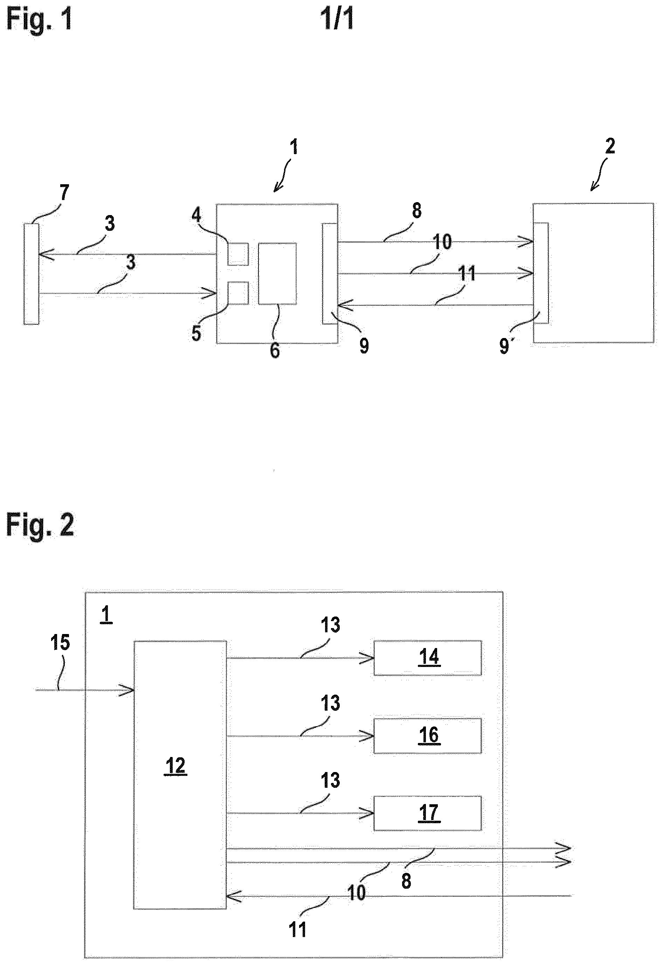

Figur 1 zeigt eine Anordnung eines erfindungsgemäßen Sensors 1 mit einer Steuerung 2.

Eine derartige Anordnung kann eingesetzt werden, um eine Gefahrenbereichsüberwachung einer Anlage, wie z. B. einer Maschine oder eines Fahrzeugs, vorzunehmen. Mit dem Sensor 1 erfolgt eine Objekterfassung innerhalb des Gefahrenbereichs. Die vom Sensor 1 generierten Signale werden der Steuerung 2 zugeführt, die abhängig von diesen Signalen die Anlage steuert.

Der Sensor 1 ist im vorliegenden Fall als optischer Sensor 1 ausgebildet. Dieser kann z. B. als Lichtvorhang, Lichtschranke, Flächendistanzsensor oder Codeleser ausgebildet sein. Im vorliegenden Fall ist der Sensor 1 als Distanzsensor ausgebildet.

Der Sensor 1 weist als Sensorkomponente einen Lichtstrahlen 3 emittierenden Sender 4 und einen Lichtstrahlen 3 emittierenden Empfänger 5 auf. Die am Ausgang des Empfängers 5 anstehenden Empfangssignale werden in eine Auswerteeinheit 6 eingelesen. Im einfachsten Fall besteht die Auswerteeinheit 6 aus einer Rechnereinheit, wie z. B. einem Microcontroller. Im vorliegenden Fall ist der Sensor 1 als Sicherheitssensor ausgebildet. Zur Erfüllung der normativen Anforderungen für den Einsatz im Bereich der Sicherheitstechnik weist die Auswerteeinheit 6 zwei sich gegenseitig zyklisch überwachende Rechnereinheiten auf.

In dem Sensor 1 erfolgen Distanzmessungen auf einem Impuls-Laufzeit-Verfahren. Hierzu werden vom Sender 4 Lichtstrahlen 3 in Form von Lichtimpulsen emittiert, deren Laufzeiten zu einem zu detektierenden Objekt 7 erfasst werden. Aus den Distanzzeiten generiert die Auswerteeinheit 6 ein Objektfeststellungssignal 8.

Der Sensor 1 weist eine Schnittstelleneinheit 9 auf. Eine korrespondierende Schnittstelleneinheit 9' ist bei der Steuerung 2 vorgesehen.

Die Schnittstelleneinheit 9 des Sensors 1 weist mehrere Schnittstellenkomponenten auf. Insbesondere ist ein Ausgang zur Ausgabe des Objektfeststellungssignals 8 an die Steuerung 2 vorgesehen. Weiterhin sind Schnittstellenkomponenten vorgesehen, die einen bidirektionalen Datenaustausch zwischen dem Sensor 1 und der Steuerung 2 ermöglichen. Insbesondere sendet der Sensor 1 Meldesignale 10 an die Steuerung 2, worauf die Steuerung 2 Antwortsignale 11 an den Sensor 1 sendet.

Figur 2 zeigt ein Funktionsdiagramm zur Veranschaulichung der Funktionsweise des erfindungsgemäßen Sensors 1. Die Funktionalität des Sensors 1 wird über eine Betriebsablaufsteuerung 12 gesteuert, die im vorliegenden Fall in der Rechnereinheit der Auswerteeinheit 6 integriert ist.

Erfindungsgemäß wird mit der Betriebsablaufsteuerung 12 die Funktion des Sensors 1 derart gesteuert, dass die wenigstens eine Rechnereinheit bei reduzierter Taktrate betrieben ist und/oder dass die Komponenten des Sensors 1 deaktiviert sind.

Durch Steuersignale 13 für eine veränderbare Takteinstellung 14 kann im einfachsten Fall die Taktrate der Rechnereinheit zwischen einer Maximal-Taktrate und einer Minimal-Taktrate, die signifikant kleiner ist als die Maximal-Taktrate, angeschaltet werden. Generell ist auch ein mehrstufiges Umschalten möglich.

Die Veränderung der Taktrate kann ereignisgesteuert erfolgen. Insbesondere bildet die wenigstens eine Rechnereinheit die Auswerteeinheit 6.

Weiterhin kann die Veränderung der Taktrate wie auch die zeitweise Abschaltung von Komponenten des Sensors 1 temperaturgesteuert erfolgen.

Hierzu wird die Innentemperatur des Sensors 1 mittels einer geeigneten Sensorik gemessen. Die entsprechenden Temperatursignale 15 werden der Betriebsablaufsteuerung 12 zugeführt, die abhängig von diesen den Betrieb des Sensors 1 steuert.

Wird anhand der Temperatursignale 15 eine Überhitzung des Sensors 1 festgestellt, wird mit Steuersignalen 13 die Takteinstellung 14 angesteuert, wodurch die Taktrate sofort oder in Stufen auf die Minimal-Taktrate reduziert wird. Ist später die Innentemperatur des Sensors 1 wieder abgefallen, wird die Taktrate wieder erhöht.

Weiterhin werden, solange die Temperatursignale 15 eine erhöhte Innentemperatur registrieren, mit Steuersignalen 13 Abschaltfunktionen 16, 17 aktiviert.

Mit der Abschaltfunktion 16 wird der Funktionsumfang des Sensors 1 reduziert, insbesondere dann, wenn die Taktrate der Rechnereinheit reduziert ist. Beispielsweise kann die Genauigkeit von Auswertealgorithmen reduziert werden. Weiterhin können Algorithmen zur Parametereinstellung und/oder zur Verbesserung der Störfestigkeit von Steuersignalen 13 deaktiviert oder reduziert werden. Des Weiteren können Reaktionszeiten des Sensors 1, insbesondere bei der Generierung des Objektfeststellungssignals 8 erhöht werden.

Mit der Abschaltfunktion 17 werden bei erhöhten Innentemperaturen des Sensors 1 Komponenten des Sensors 1, beispielsweise Schnittstellenkomponente oder Anzeigeeinheiten, deaktiviert.

Mit den Meldesignalen 10 signalisiert der Sensor 1 der Steuerung 2, wann dessen Taktrate reduziert ist, dessen Funktionalität reduziert ist und/oder Komponenten des Sensors 1 deaktiviert sind.

Mit den Antwortsignalen 11 kann die Steuerung 2 einen derartig eingeschränkten Betrieb des Sensors 1 freigeben. Weiterhin kann anhand der Meldesignale 10 die Sensorapplikation, d. h. die Überwachung der Anlage mittels des Sensors 1, an die geänderte Funktionalität angepasst werden.

### Bezugszeichenliste

- (1): Sensor
- (2): Steuerung
- (3): Lichtstrahlen
- (4): Sender
- (5): Empfänger
- (6): Auswerteeinheit
- (7): Objekt
- (8): Objektfeststellungssignal
- (9): Schnittstelleneinheit
- (9'): Schnittstelleneinheit
- (10): Meldesignal
- (11): Antwortsignal
- (12): Betriebsablaufsteuerung
- (13): Steuersignal
- (14): Takteinstellung
- (15): Temperatursignal
- (16): Abschaltfunktion
- (17): Abschaltfunktion

## Patentansprüche

1. Sensor (1) mit Sensorkomponenten, welche zur Erfassung von Objekten (7) ausgebildet sind, mit einer Auswerteeinheit (6), welche zur Auswertung von Sensorsignalen der Sensorkomponenten ausgebildet ist, und mit Schnittstellenkomponenten, welche zur Ein- und/oder Ausgabe von Signalen ausgebildet sind, **dadurch gekennzeichnet, dass** wenigstens eine Rechnereinheit vorgesehen ist, welche mit einer variablen Taktrate betreibbar ist und/oder dass Komponenten des Sensors (1) nur zeitweise aktiviert sind.

2. Sensor (1) nach Anspruch 1, **dadurch gekennzeichnet, dass** dessen Verlustleistung dadurch reduziert ist, dass die wenigstens eine Rechnereinheit bei reduzierter Taktrate betrieben ist und/oder dass Komponenten des Sensors (1) deaktiviert sind.

3. Sensor (1) nach einem der Ansprüche 1 oder 2, **dadurch gekennzeichnet, dass** wenigstens eine Rechnereinheit die Auswerteeinheit (6) bildet.

4. Sensor (1) nach einem der Ansprüche 1 bis 3, **dadurch gekennzeichnet, dass** dieser ein Sicherheitssensor ist.

5. Sensor (1) nach Anspruch 4, **dadurch gekennzeichnet, dass** die Auswerteeinheit (6) zwei sich zyklisch überwachende Rechnereinheiten aufweist.

6. Sensor (1) nach einem der Ansprüche 1 bis 5, **dadurch gekennzeichnet, dass** die zeitweise aktivierbaren Komponenten Schnittstellenkomponenten sind.

7. Sensor (1) nach einem der Ansprüche 1 bis 6, **dadurch gekennzeichnet, dass** die wenigstens eine Rechnereinheit während einer Anlaufphase mit einer hohen Taktrate betrieben ist und während eines darauf folgenden Arbeitsbetriebs mit reduzierter Taktrate betrieben ist.

8. Sensor (1) nach Anspruch 7, **dadurch gekennzeichnet, dass** in der wenigstens einen Rechnereinheit während der Anlaufphase Routinen für den nachfolgenden Arbeitsbetrieb abgearbeitet werden.

9. Sensor (1) nach einem der Ansprüche 1 bis 8, **dadurch gekennzeichnet, dass** Mittel zur Messung der inneren Sensortemperatur vorgesehen sind und dass abhängig von diesen Messergebnissen die Taktrate der wenigstens einen Rechnereinheit und/oder die Aktivierung oder Deaktivierung der Komponenten vorgegeben ist.

10. Sensor (1) nach Anspruch 9, **dadurch gekennzeichnet, dass** das Maß der Reduzierung der Taktrate der wenigstens einen Rechnereinheit durch die gemessene innere Sensortemperatur bestimmt ist.

11. Sensor (1) nach einem der Ansprüche 1 bis 10, **dadurch gekennzeichnet, dass** bei einem Betrieb der wenigstens einen Rechnereinheit bei reduzierter Taktrate der Funktionsumfang des Sensors (1) reduziert ist.

12. Sensor (1) nach Anspruch 11, **dadurch gekennzeichnet, dass** bei reduzierter Taktrate die Genauigkeit von Auswertealgorithmen reduziert ist.

13. Sensor (1) nach einem der Ansprüche 11 oder 12, **dadurch gekennzeichnet, dass** bei reduzierter Taktrate Reaktionszeiten des Sensors (1) erhöht sind.

14. Sensor (1) nach einem der Ansprüche 11 bis 13, **dadurch gekennzeichnet, dass** bei reduzierter Taktrate Funktionalitäten des Sensors (1) deaktiviert oder reduziert sind.

15. Sensor (1) nach Anspruch 14, **dadurch gekennzeichnet, dass** in der wenigstens einen Rechnereinheit sicherheitsrelevante und nicht sicherheitsrelevante Funktionalitäten implementiert sind, und dass bei reduzierter Taktrate nur die nicht sicherheitsrelevanten Funktionalitäten deaktiviert oder reduziert sind.

16. Sensor (1) nach einem der Ansprüche 14 oder 15, **dadurch gekennzeichnet, dass** Algorithmen zur Parametereinstellung und/oder zur Verbesserung der Störfestigkeit von Sensorsignalen deaktiviert oder reduziert sind.

17. Sensor (1) nach einem der Ansprüche 1 bis 16, **dadurch gekennzeichnet, dass** eine Reduzierung des Funktionsumfangs an eine externe Einheit in Form eines Meldesignals (10) ausgegeben wird.

18. Sensor (1) nach Anspruch 17, **dadurch gekennzeichnet, dass** abhängig von dem Meldesignal (10) in der internen Einheit eine Sensorapplikation veränderbar ist.

19. Sensor (1) nach einem der Ansprüche 1 bis 18, **dadurch gekennzeichnet, dass** dieser ein optischer Sensor (1) ist.

20. Sensor (1) nach Anspruch 19, **dadurch gekennzeichnet, dass** der optische Sensor (1) eine Lichtschranke, ein Lichtvorhang, ein Distanzsensor, ein Codeleser oder ein Flächendistanzsensor ist.

21. Verfahren zum Betrieb eines Sensors (1) mit Sensorkomponenten, welche zur Erfassung von Objekten (7) ausgebildet sind, mit einer Auswerteeinheit (6), welche zur Auswertung von Sensorsignalen der Sensorkomponenten ausgebildet ist, und mit Schnittstellenkomponenten, welche zur Ein- und/oder Ausgabe von Signalen ausgebildet sind, **dadurch gekennzeichnet, dass** wenigstens eine Rechnereinheit vorgesehen ist, welche mit einer variablen Taktrate betrieben werden kann und/oder dass Komponenten des Sensors (1) nur zeitweise aktiviert werden.
